# EUROPÄISCHE PATENTSCHRIFT

(11) **EP 0 353 395 B1**
(45) Veröffentlichungstag und Bekanntmachung des Hinweises auf die Patenterteilung: **09.06.1993**
(21) Anmeldenummer: 89107004.7
(22) Anmeldetag: 19.04.1989
(51) Int. Cl.: G01B 21/22

(54) **Winkelmessvorrichtung**
Angle-measuring device
Appareil de mesure d'angles

(30) Priorität: 25.05.1988 DE 3817612; 18.03.1989 DE 3908932
(43) Veröffentlichungstag der Anmeldung: 07.02.1990
(73) Patentinhaber: Dr. Johannes Heidenhain GmbH, D-83292 Traunreut (DE)
(72) Erfinder: Brunner, Arthur, D-8223 Trostberg (DE); Mitterreiter, Johann, Dipl.-Ing. (FH), D-8221 Tacherting (DE)

(56) Entgegenhaltungen:
- DE-A- 3 740 744
- US-A- 4 132 890
- US-A- 4 342 909
- US-A- 4 639 595

## Beschreibung

Die Erfindung betrifft eine Winkelmeßvorrichtung gemäß dem Oberbegriff der unabhängigen Patentansprüche 1, 2 und 3.

Derartige Winkelmeßvorrichtungen werden auch als "Einbaudrehgeber" bezeichnet, die keine eigene Lagerung besitzen (z.B. Firmendruckschrift der DR. JOHANNES HEIDENHAIN GmbH, Traunreut: Drehgeber, Ausgabe 2/88).

Aus der US-A-4,639,595 ist eine vormontierte Winkelmeßvorrichtung ohne eigene Lagerung bekannt. Im vormontierten Zustand bewirkt eine Klemmfeder den Zusammenhalt der Abtasteinrichtung mit der Nabe, an der der Teilungsträger angebracht ist. An der Nabe ist ein Anschlag vorgesehen, der die Abtasteinrichtung berührt und die Nabe relativ zur Abtasteinrichtung in radialer Richtung fixiert. In diesem Zustand wird die Abtasteinrichtung an einen Träger der Meßwelle angeschraubt, wodurch die radiale Lagebeziehung zwischen der Nabe und der Abtasteinrichtung festgelegt ist. Anschließend wird die Nabe auf der Meßwelle axial verschoben und mit Hilfe der Klemmfeder, welche in einer Ringnut der Nabe einrastet, die endgültige axiale Lage der Nabe gegenüber der Abtasteinrichtung festgelegt. Diese Verschiebung ist erforderlich, um die Berührung des Anschlages der Nabe mit der Abtasteinrichtung aufzuheben und eine reibungsfreie Drehung der Nabe relativ zur Abtasteinrichtung zu gewährleisten. Eine radiale Führung der Nabe durch die Klemmfeder kann bei diesem Schritt nicht mehr erfolgen, da diese radiale Lagebeziehung bereits fixiert wurde.

Bei dieser Winkelmeßvorrichtung ist zwar im vormontierten Zustand durch das Zusammenwirken mehrerer Anschläge von Nabe und Abtasteinrichtung eine definierte Zuordnung zwischen der Nabe und der Abtasteinrichtung in radialer und axialer Richtung gegeben. Diese Zuordnung muß aber während des Anbaus gelöst werden. Durch die notwendige axiale Verschiebung der Nabe und somit des Teilungsträgers relativ zur Abtasteinrichtung kann keine definierte Zuordnung erzielt werden, und zwar weder in radialer noch in axialer Richtung. Die Abtasteinrichtung ist nicht dafür ausgebildet, die Klemmfeder während des Anbaus in einer definierten axialen Lage zu fixieren.

Weitere Winkelmeßvorrichtungen sind in der US-A-4,556,792 und der DE-A1-37 40 744 beschrieben. Zur axialen und radialen Einstellung der Nabe gegenüber der Abtasteinrichtung sind aufwendige Justiervorrichtungen notwendig. Die Fixierung der Nabe gegenüber der Abtasteinrichtung erfolgt mittels einer Vielzahl von Elementen, die alle vom Anwender wieder mühsam und zeitaufwendig entfernt werden müssen.

Der Erfindung liegt die Aufgabe zugrunde, Winkelmeßvorrichtungen zu schaffen, bei der die Zuordnung zwischen dem Teilungsträger und der Abtasteinrichtung bereits vom Meßgerätehersteller durch konstruktiv einfache Maßnahmen vorgegeben ist und somit eine exakte Ausrichtung der Teilung relativ zur Abtasteinrichtung gewährleistet ist.

Diese Aufgabe wird durch Winkelmeßvorrichtungen gemäß den Patentansprüchen 1, 2 und 3 gelöst.

Die besonderen Vorteile der erfindungsgemäßen Winkelmeßvorrichtungen liegen darin, daß die Zuordnung zwischen der Teilung und der Abtasteinrichtung in axialer und in radialer Richtung vom Meßgerätehersteller vorgegeben ist und durch Vormontage mit einfachen Mitteln diese Zuordnung auch während der Anlieferung, dem Anbau sowie auch während des Betriebes aufrechterhalten bleibt. Die Montage derartiger Winkelmeßvorrichtungen ist vom Anwender selbst auf einfache Weise ohne aufwendige Justiervorrichtungen, ohne Zeitaufwand für Justierungen und ohne geschultes Personal möglich.

Anhand der Zeichnungen werden Ausführungsbeispiele der Erfindung näher erläutert.

Es zeigt
- Figur 1: einen Längsschnitt durch eine erfindungsgemäße Winkelmeßvorrichtung;
- Figur 2: die Winkelmeßvorrichtung nach Figur 1 entlang der Schnittlinie II-II;
- Figur 3: die Winkelmeßvorrichtung nach Figur 1 entlang der Schnittlinie III-III;
- Figur 4: einen Längsschnitt durch eine zweite Winkelmeßvorrichtung;
- Figur 5: die Winkelmeßvorrichtung nach Figur 4 entlang der Schnittlinie V-V;
- Figur 6: den Teilschnitt VI-VI nach Figur 5;
- Figur 7: ein drittes Ausführungsbeispiel einer Winkelmeßvorrichtung im Querschnitt;
- Figur 8: ein viertes Ausführungsbeispiel;
- Figur 9: ein fünftes Ausführungsbeispiel einer Winkelmeßvorrichtung mit einer Abdeckung im Längsschnitt;
- Figur 10: einen Teilschnitt der Winkelmeßvorrichtung nach Figur 9 entlang der Schnittlinie X-X;
- Figur 11: einen Teilschnitt der Winkelmeßvorrichtung nach Figur 9 entlang der Schnittlinie XI-XI;
- Figur 12: ein sechstes Ausführungsbeispiel einer Winkelmeßvorrichtung mit einer Abdeckung im Längsschnitt;
- Figur 13: die Winkelmeßvorrichtung nach Figur 12 entlang der Schnittlinie XIII-XIII.

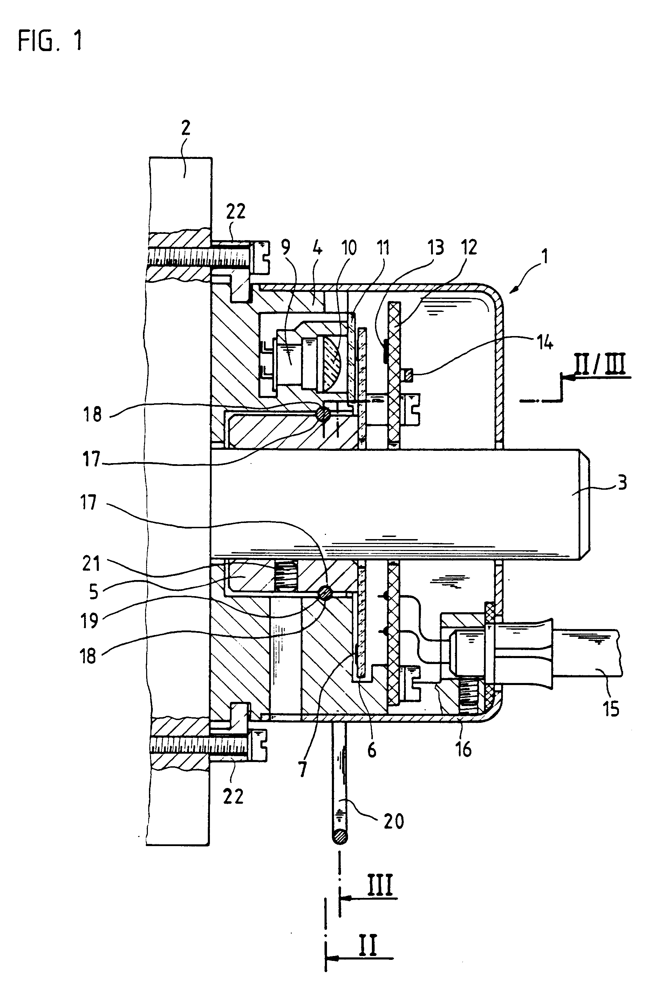

In Figur 1 ist eine Winkelmeßvorrichtung 1 dargestellt, die an einer Antriebseinheit 2, beispielsweise einem Motor, angebaut ist. Mit der Winkelmeßvorrichtung 1 soll die Drehung einer Antriebswelle 3 gegenüber einer Abtasteinrichtung 4 gemessen werden. Die Winkelmeßvorrichtung 1 weist eine Nabe 5 auf, an der eine Scheibe 6 mit einer Teilung 7 zentrisch angebracht ist.

Die Abtasteinrichtung 4 besteht aus einer Lichtquelle 9, einem Kondensor 10, einer Abtastplatte 11 sowie einer Platine 12 mit Photoelementen 13 und weiteren elektrischen Bauelementen 14. Die Teilung 7 wird in bekannter Weise im Durchlichtverfahren abgetastet. Die Abtastsignale werden über eine elektrische Leitung 15 zu einer Auswerteeinrichtung, so z. B. zu einem Zähler oder einer numerischen Steuerung geleitet. Die elektrische Leitung 15 ist durch eine Abdeckung 16 der Winkelmeßvorrichtung 1 geführt.

Die Abtasteinrichtung 4, insbesondere die Abtastplatte 11, muß sowohl in radialer als auch in axialer Richtung genau zur Teilung 7 ausgerichtet sein. Diese Zuordnung ist durch die Fertigung der Nabe 5 und der Abtasteinrichtung 4 vorgegeben. In der Nabe 5 sind vier gegeneinander um 90° winkelversetzte Ausnehmungen in Form von Nuten 17 in einem exakt vorgegebenen Abstand zur Scheibe 6 eingebracht. Entsprechend sind in der Abtasteinrichtung 4 vier Öffnungen 18 vorgesehen, in die zwei Spannbügel 19, 20 eingebracht sind. Der Durchmesser der Öffnungen 18 ist so gewählt, daß die Schenkel der Spannbügel 19, 20 ohne viel Kraftaufwand in die Öffnungen 18 und die Nuten 17 eingebracht werden können, aber trotzdem die Nabe 5 und die Abtasteinrichtung 4 definiert zusammenhalten. Die axiale Lage der Öffnungen 18 ist auch fest vorgegeben und bestimmt mit den Nuten 17 den Abstand zwischen der Scheibe 6 und der Abtastplatte 11.

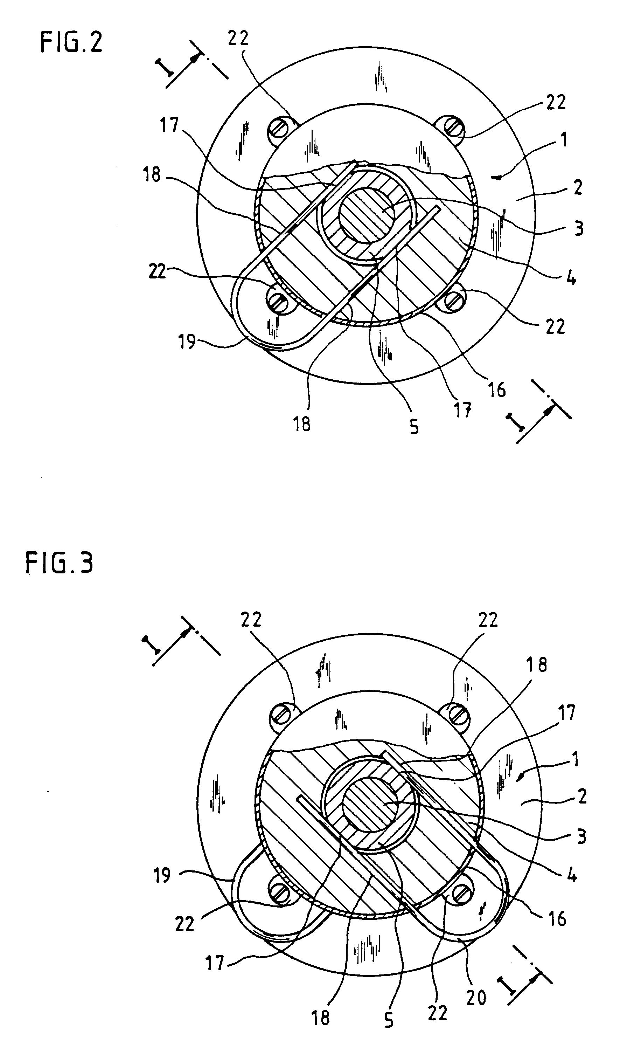

Wie aus den Figuren 2 und 3 zu sehen ist, klemmen die je zwei parallel verlaufenden Schenkel der Spannbügel 19, 20 die Nabe 5 und die Abtasteinrichtung 4 an jeweils zwei um 180° gegeneinander versetzten Bereichen, wobei die beiden Spannbügel 19,20 senkrecht zur Nabenachse und um 180° gegeneinander versetzt eingeschoben sind. Die exakte axiale Fixierung in zwei Richtungen erfolgt dadurch, daß die Schenkel der Spannbügel 19, 20 die Nuten 17 berühren, dabei wirken die Flächen der Nuten 17 als Anschlagflächen.

Nachdem die Spannbügel 19, 20 vom Hersteller eingeschoben sind, wird die Winkelmeßvorrichtung 1 dem Anwender geliefert. Zum Anbau der Winkelmeßvorrichtung 1 an die Antriebseinheit 2 wird die vormontierte Winkelmeßvorrichtung 1 auf die Antriebswelle 3 aufgeschoben und die Nabe 5 mittels einer Klemmschraube 21 mit der Antriebswelle 3 verbunden. Die Abtasteinrichtung 4 mit der Abdeckung 16 wird mittels bekannter Spannpratzen 22 an der Anbaufläche der Antriebseinheit 2 befestigt. Anstelle der Spannpratzen 22 können auch andere Befestigungsmittel vorgesehen werden.

Nachdem die Winkelmeßvorrichtung 1 mit der Antriebseinheit 2 bzw. der Antriebswelle 3 fest verbunden ist, werden die Spannbügel 19, 20 durch Herausziehen entfernt. Die Winkelmeßvorrichtung 1 ist betriebsbereit, ohne daß der Anwender umständliche Justierungen vornehmen muß. Nach dem Entfernen der Spannbügel 19, 20 ist eine relative Drehung zwischen der Nabe 5 und der Abtasteinrichtung 4 ohne störende Reibung möglich.

In nicht gezeigter Weise können die Spannbügel durch einzelne Stifte ersetzt werden. Um damit eine definierte Zentrierung zu erreichen sind vorzugsweise drei einzelne Stifte zwischen der Nabe und der Abtasteinrichtung vorgesehen, die jeweils um 120° gegeneinander versetzt eingeschoben sind. Bei Verwendung von vier einzelnen Stiften sollte der gegenseitige Versatz 90° sein.

Bei entsprechender Ausgestaltung eines Spannbügels würde es auch genügen, nur einen Spannbügel zu verwenden, dabei sollte sichergestellt sein, daß er die Nabe mit der Abtasteinrichtung an mindestens drei winkelmäßig gegeneinander versetzten Bereichen klemmt.

Die gezeigten Nuten in der Nabe können auch als Ringnut ausgeführt sein, wobei aber dann die Winkelzuordnung zwischen Nabe und Abtasteinrichtung, d.h., zwischen Klemmschraube und der Zugangsöffnung in der Abtasteinrichtung nicht mehr festgelegt ist.

Der Querschnitt der Spannbügel oder Stifte kann den Anforderungen nach gewählt werden, entsprechend sind auch die Nuten in der Nabe und die Öffnungen in der Abtasteinrichtung geformt. Anstelle einer Ausnehmung kann auch eine Erhebung oder mehrere Erhebungen an der Nabe vorgesehen sein, die als Anschlagflächen für ein Klemmelement oder mehrere Klemmelemente wirken.

Bei dem in den Figuren 1 bis 3 gezeigten ersten Beispiel ist es gegenüber dem Stand der Technik vorteilhaft, daß die Zuordnung zwischen der Scheibe 6 und der Abtastplatte 11 vom Hersteller und vom Anwender nicht aufwendig justiert werden muß, sondern durch die Fertigung vorgegeben ist.

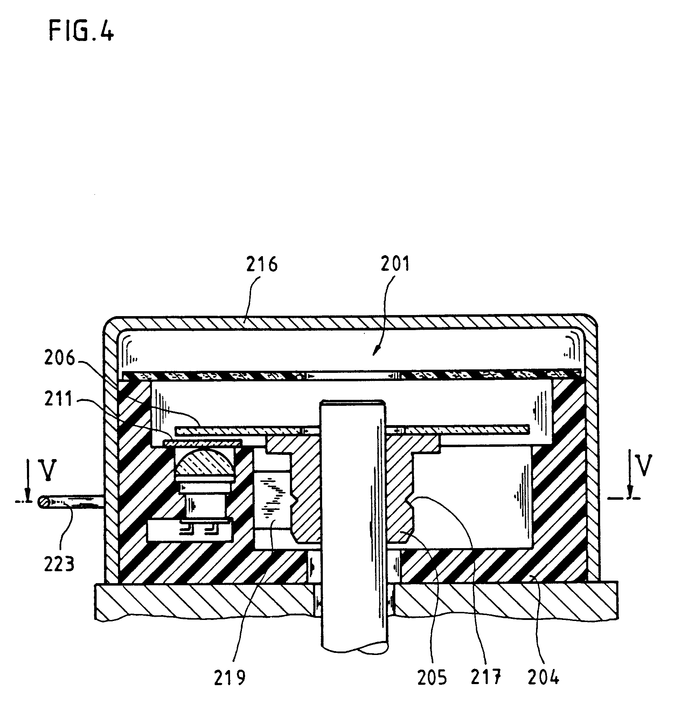

In der Figur 4 ist ein Längsschnitt durch eine zweite Winkelmeßvorrichtung 201 gezeigt. Der Grundaufbau der Winkelmeßvorrichtung 201 entspricht dem Aufbau der vorbeschriebenen Winkelmeßvorrichtung 1 gemäß Figur 1. Äquivalente Bauelemente sind deshalb nicht mehr erwähnt und bezeichnet. Bei der Winkelmeßvorrichtung 201 dient zur Klemmung einer Nabe 205 mit einer Abtasteinrichtung 204 ein Fixierelement in Form von zwei fingerförmigen Vorsprüngen 219, 220. Die Vorsprünge 219, 220 sind an die Abtasteinrichtung 204 angeformt, wobei die Abtasteinrichtung 204 mit den Vorsprüngen 219, 220 vorzugsweise ein Kunststoffteil ist.

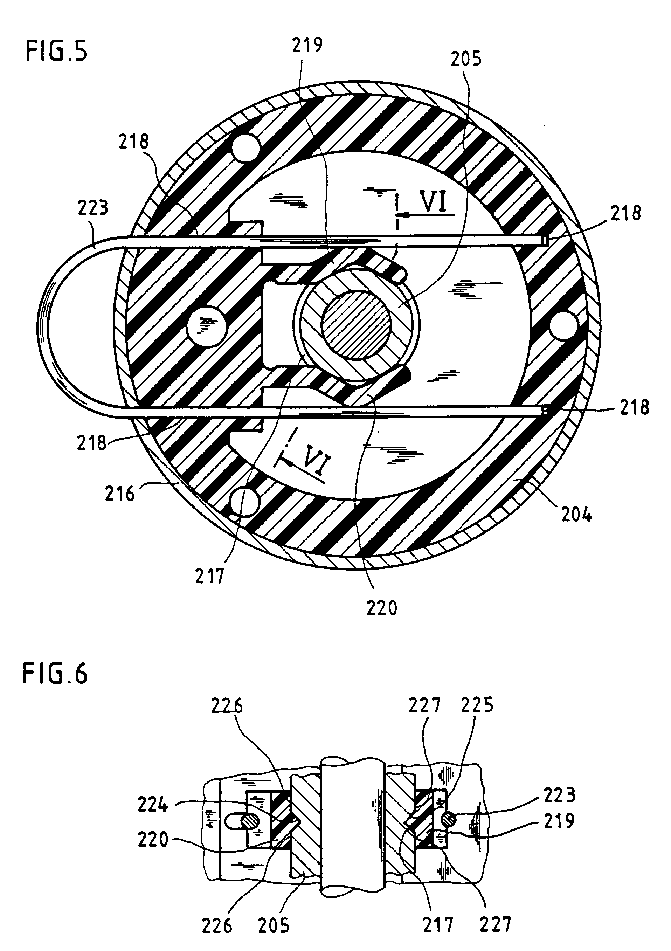

Die Ausbildung der Vorsprünge 219, 220 ist in der Figur 5 deutlich erkennbar. Jeder der Vorsprünge 219, 220 ist senkrecht zur Nabenachse federnd und in Richtung der Nabenachse starr. Die Vorsprünge 219, 220 verlaufen senkrecht zur Nabenachse und bilden in der Ruhelage einen Raum für die Nabe 205 mit einem Querschnitt größer als der Durchmesser einer Ringnut 217 der Nabe 205. Durch einen Spannbügel 223 als Druckelement werden die beiden Vorsprünge 219, 220 bei der Vormontage gegen die Oberfläche der Nabe 205 und somit an die als Anschlagflächen wirkende Ringnut 217 gedrängt. Der Spannbügel 223 ist hierzu in Öffnungen 218 der Abdeckung 216 und der Abtasteinrichtung 204 eingeschoben. Zur Stabilisierung der Vorsprünge 219, 220 in Richtung der Nabenachse sind in den Vorsprüngen 219, 220 senkrecht zur Nabenachse verlaufende Nuten vorgesehen, die eine Passung für die Schenkel des Spannbügels 223 bilden.

In der Figur 6 ist eine sehr vorteilhafte Ausgestaltung der Vorsprünge 219, 220 gezeigt. An jedem der Vorsprünge 219, 220 ist eine senkrecht zur Nabenachse verlaufende und der Ringnut 217 angepaßte Nase 224, 225 vorgesehen. Diese Nasen 224, 225 weisen in Richtung der Ringnut 217 und berühren diese im vormontierten Zustand an vier um jeweils 90° gegeneinander versetzten Bereichen. Die Lage der Nasen 224, 225 in Richtung der Nabenachse ist vorgegeben und bestimmt mit der Lage der Seitenflächen der Ringnut 217 den Abstand zwischen einer Scheibe 206 und einer Abtastplatte 211. Die radiale Zuordnung von Scheibe 206 und Abtastplatte 211 ist durch die Lage der Öffnungen 218 sowie durch die Klemmung der Vorsprünge 219, 220 an die Nabe 205 mittels des Spannbügels 223 fertigungstechnisch vorgegeben.

Damit die Scheibe 206 nach der Vormontage parallel zur Abtastplatte 211 ausgerichtet ist, sind beidseitig der Nasen 224, 225 Flächen 226, 227 an den Vorsprüngen 219, 220 vorgesehen, die die Oberfläche der Nabe 205 außerhalb der Ringnut 217 berühren. Eine Kippung der Nabe 205 und somit eine Zerstörung der Scheibe 206 während des Transports wird dadurch vermieden. Diese Ausführung ist auch bei den nachfolgend beschriebenen Winkelmeßvorrichtungen 301, 401, 501, 601 vorteilhaft.

Der Anwender befestigt die vormontierte Winkelmeßvorrichtung 201 wie zu den Figuren 1 bis 3 bereits beschrieben und zieht den Spannbügel 223 aus den Öffnungen 218 der Abtasteinrichtung 204. Die Vorsprünge 219, 220 kehren in die Ruhelage zurück, in der sie die Ringnut 217 und die Nabe 205 nicht mehr berühren.

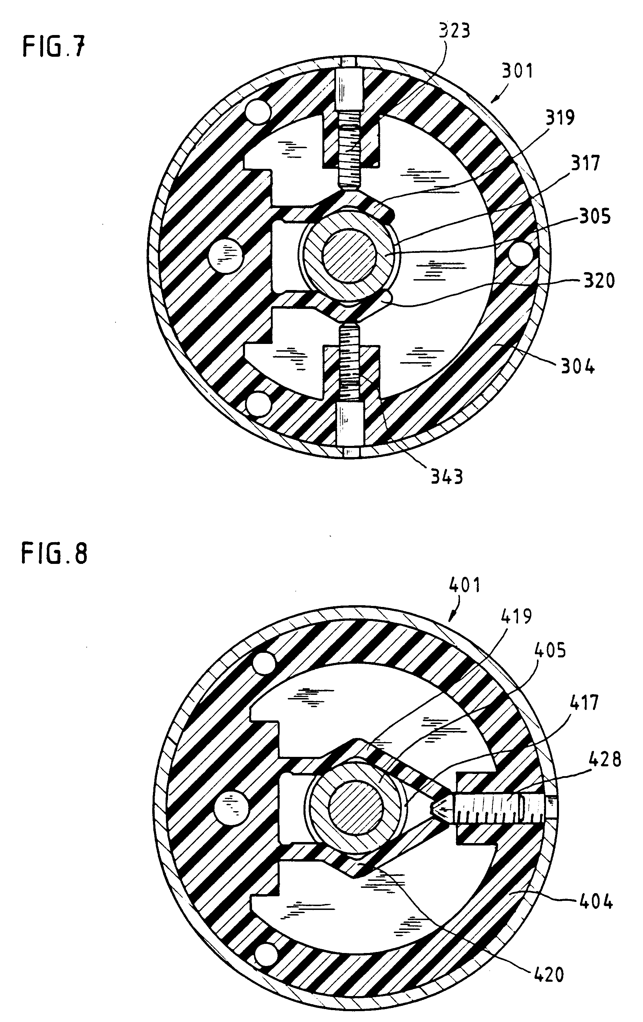

Bei einem dritten Ausführungsbeispiel einer Winkelmeßvorrichtung 301 nach Figur 7 sind anstelle des Spannbügels 223 zwei Schrauben 323 und 343 in eine Abtasteinrichtung 304 eingeschraubt, die zwei Vorsprünge 319, 320 in eine Ringnut 317 einer Nabe 305 drücken. Der weitere Aufbau der Winkelmeßvorrichtung 301 entspricht dem Aufbau der bereits beschriebenen Winkelmeßvorrichtungen 1 und 201.

Ein viertes Ausführungsbeispiel einer Winkelmeßvorrichtung 401 ist in Figur 8 gezeigt. In diesem Fall sind zwei Vorsprünge 419, 420 bereits so gefertigt, daß sie fingerförmig einen Raum umschließen, dessen Querschnitt kleiner ist als der Durchmesser einer Ringnut 417 einer Nabe 405. Die Vorsprünge 419, 420 sind wiederum in Richtung der Nabenachse starr ausgebildet und senkrecht zur Nabenachse federnd. Bei der Vormontage wird die Nabe 405 in den Raum, die die Vorsprünge 419, 420 umschließen, eingebracht. Dabei werden die Vorsprünge 419, 420 nach außen gedrückt und rasten bei Erreichen der Ringnut 417 in diese ein. Die Nabe 405 wird nach der Vormontage selbsttätig und ohne weitere Hilfsmittel von den beiden Vorsprüngen 419, 420 in axialer und radialer Richtung gehalten und fixiert. In diesem Zustand wird die Winkelmeßvorrichtung 401 an eine Antriebseinheit befestigt und der Anwender spreizt die beiden Vorsprünge 419, 420 mittels eines Spreizelementes, das beispielsweise eine Schraube 428 ist, nach außen. Im angebauten Zustand ist dadurch die Klemmung zwischen der Nabe 405 und einer Abtasteinrichtung 404 aufgehoben und die Nabe 405 kann sich relativ zur Abtasteinrichtung 404 frei drehen.

Die Schraube 428 ist senkrecht zur Nabenachse in die Abtasteinrichtung 404 eingeschraubt und weist an einem Ende einen Konus auf, mit dem die beiden Vorsprünge 419, 420 beim Eindrehen der Schraube 428 aus der Ringnut 417 gedrängt werden. Soll die Winkelmeßvorrichtung 401 von einer Antriebseinheit auf eine andere Antriebseinheit montiert werden, so ist dies bei dieser Konstruktion einfach möglich. Die Schraube 428 wird zurückgedreht, so daß die beiden Vorsprünge 419, 420 wieder in die Ringnut 417 einrasten und die Nabe 405 definiert zur Abtasteinrichtung 404 fixieren. In diesem Zustand wird die Winkelmeßvorrichtung 401 von der einen Antriebseinheit abgenommen und auf die andere aufgesetzt.

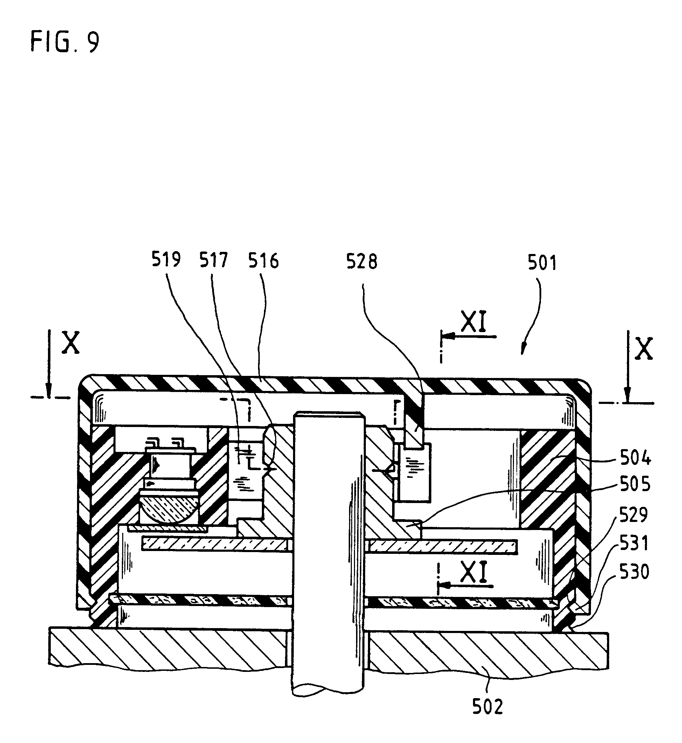

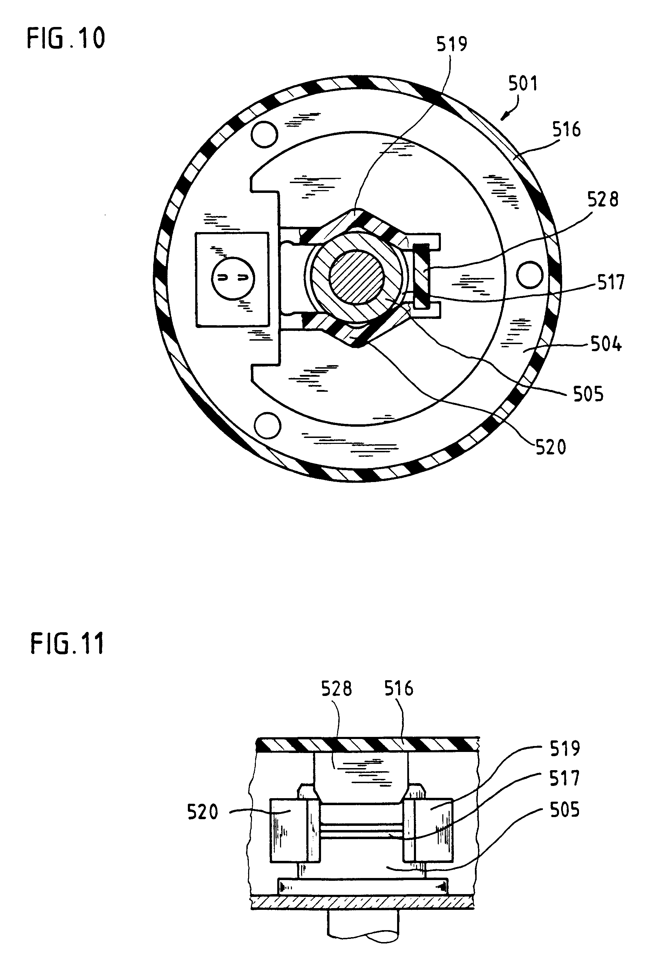

In den Figuren 9, 10 und 11 ist ein fünftes Ausführungsbeispiel gezeigt. Das Spreizelement wird von einem Keil 528 gebildet, der an einer Abdeckung 516 befestigt oder im gezeigten Beispiel angeformt ist. Diese Winkelmeßvorrichtung 501 unterscheidet sich im Grundaufbau nicht von den bereits beschriebenen Winkelmeßvorrichtungen 1, 201, 301, 401. Die Vorsprünge 519, 520 sind ebenso ausgebildet wie bei der Figur 8 beschrieben.

Nach der Montage der Winkelmeßvorrichtung 501 an eine Antriebseinheit 502 wird die Abdeckung 516 in Richtung der Nabenachse über eine Abtasteinrichtung 504 aufgesetzt, dabei drängt der Keil 528 die beiden Vorsprünge 519, 520 aus einer Ringnut 517 einer Nabe 505.

Zur Fixierung der Abdeckung 516 während des Transportes der Winkelmeßvorrichtung 501 ist am Außenumfang der Abtasteinrichtung 504 eine erste Nut 529 eingebracht. Die Abdeckung 516 weist eine Nase 531 auf, die beim Aufsetzen der Abdeckung 516 in die Nut 529 einrastet. In dieser Stellung drängt der Keil 528 die Vorsprünge 519, 520 noch nicht aus der Ringnut 517. Die Nut 529 und die Nase 531 bilden eine Transportsicherung für die Abdeckung 516. Vor der Montage der Winkelmeßvorrichtung 501 an die Antriebseinheit 502 wird die Abdeckung 516 abgenommen.

Die Abdeckung 516 ist in einer zweiten Stellung gegenüber der Abtasteinrichtung 504 rastbar. Hierzu weist die Abtasteinrichtung 504 eine zweite Nut 530 auf. Nach der Montage der Winkelmeßvorrichtung 501 an die Antriebseinheit 502 wird die Abdeckung 516 in Richtung der Antriebseinheit 502 aufgesetzt. Dabei drängt der Keil 528 die beiden Vorsprünge 519, 520 nach außen von den Seitenflächen der Ringnut 517 weg und die Nase 531 rastet in der Endstellung in die Nut 530 ein.

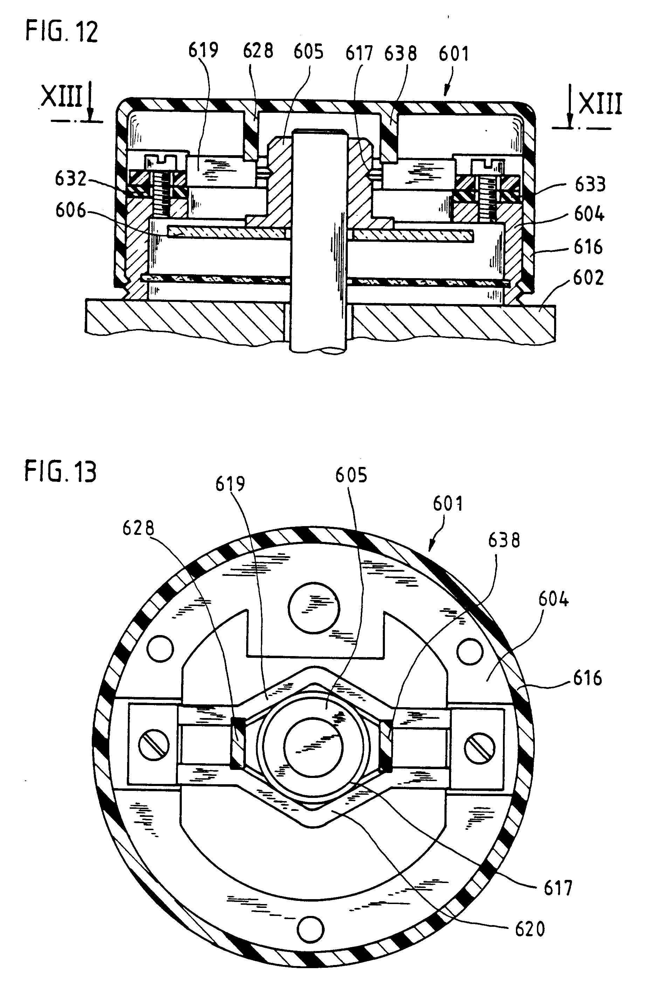

Eine Winkelmeßvorrichtung 601 nach den Figuren 12 und 13 entspricht im Grundaufbau der oben beschriebenen Winkelmeßvorrichtung 501. Die Klemmelemente einer Abtasteinrichtung 604 sind als Stege 619, 620 ausgebildet. Die Enden der beiden Stege 619, 620 sind an der Abtasteinrichtung 604 befestigt. Die beiden Stege 619, 620 bilden einen Raum, dessen Querschnitt kleiner ist als der Durchmesser einer Ringnut 617 einer Nabe 605. Die Stege 619, 620 sind in Richtung der Nabenachse wiederum starr und senkrecht dazu federnd. Bei der Vormontage rasten die Stege 619, 620 in die Ringnut 617 ein und berühren die beiden Seitenflächen dieser Ringnut 617, so daß die Nabe 605 durch sie in einer vorgegebenen Lage gehalten wird.

Nach der Montage der Winkelmeßvorrichtung 601 an eine Antriebseinheit 602 wird die selbsttätige Klemmung der Stege 619, 620 durch Einbringen eines Spreizelementes aufgehoben. In diesem gezeigten sechsten Ausführungsbeispiel wird dieses Spreizelement von zwei Keilen 628, 638 gebildet. Diese Keile 628, 638 sind wiederum an eine Abdeckung 616 angeformt und wirken mit den Stegen 619, 620 beim Aufsetzen der Abdeckung 616 zusammen.

In der Figur 12 sind zwischen den Enden der Stege 619, 620 und der Abtasteinrichtung 604 Plättchen 632,633 gezeigt. Die Dicke dieser Plättchen 632,633 bestimmt die axiale Lage der Stege 619, 620 in Bezug auf die Abtasteinrichtung 604. Der Hersteller kann durch die Wahl der geeigneten Plättchen 632, 633 verschiedene Abstände zwischen einer Scheibe 606 und einer hier nicht dargestellten Abtastplatte realisieren. Die Plättchen 632,633 können auch als Federscheiben ausgebildet sein.

Die Ausführungsformen eins, zwei, vier, fünf und sechs haben den Vorteil, daß der Anwender die Winkelmeßvorrichtungen 1, 201, 401, 501, 601 ohne viel Aufwand von einer Antriebseinheit auf eine andere Antriebseinheit umsetzen kann. Dabei bleibt die Zuordnung zwischen Nabe 5, 205, 405, 505, 605 und Abtasteinrichtung 4, 204, 404, 504, 604 ohne Justierung erhalten.

Als weitere Vorteile sind bei den Ausführungsformen nach den Figuren 8 bis 13 anzuführen, daß bei der Montage der Winkelmeßvorrichtung 401, 501, 601 an eine Antriebseinheit 402, 502, 602 kein Element aus der Winkelmeßvorrichtung 401, 501, 601 entfernt werden muß. Weiterhin haben diese Konstruktionen den Vorteil, daß nach der Fertigung der Abtasteinrichtung 404, 504, 604 eine Feinbearbeitung der Vorsprünge 419, 420, 519, 520 bzw. der Stege 619, 620 zur exakten Anpassung an den Durchmesser der Ringnut 417, 517, 617 einfach realisierbar ist. Die Abtasteinrichtung 404, 504, 604 mit den Vorsprüngen 419, 420, 519, 520 sowie den Stegen 619, 620 ist beispielsweise ein Druckguß- oder Spritzgußteil bei dem die Innenflächen der Vorsprünge 419, 420, 519, 520 und der Stege 619, 620 bereits exakt hergestellt werden oder durch Drehen bzw. Schleifen nachbearbeitet werden. Diese Innenflächen definieren mit den Flächen der Ringnut 417, 517, 617 die radiale und axiale Lage der Nabe 405, 505, 605 relativ zur Abtasteinrichtung 404, 504, 604.

Die Stege können auch so ausgebildet sein, daß sie mittels zumindest eines Druckelementes in eine Ausnehmung gedrückt werden.

Bei den gezeigten Ausführungsbeispielen wird die Winkelmeßvorrichtung in Richtung der Nabenachse auf die Antriebseinheit gesetzt. Wenn die Abtasteinrichtung U- oder V-förmige Anschlagflächen aufweist, die mit einem Zentrierflansch der Antriebseinheit zusammenwirken, dann kann die Winkelmeßvorrichtung auch senkrecht zur Nabenachse an die Antriebseinheit herangeführt werden.

Die Erfindung ist nicht auf die gezeigte lichtelektrische Winkelmeßvorrichtung beschränkt, sondern sie ist auch bei induktiven, magnetischen und kapazitiven Winkelmeßvorrichtungen realisierbar. Die Teilung kann dabei inkremental oder absolut, beispielsweise als Graukeil oder Widerstandsstreifen ausgeführt sein.

Im gezeigten Ausführungsbeispiel ist die Nabe in Form einer Hohlwelle ausgebildet, sie kann aber auch als Vollwelle ausgebildet sein, die über geeignete Mittel mit der Antriebswelle, z. B. einer Hohlwelle, verbunden ist.

Bei allen beschriebenen Winkelmeßvorrichtungen wird die axiale Lage der Nabe relativ zur Abtasteinrichtung durch das Zusammenwirken einer Ausnehmung in der Nabe mit Oberflächenbereichen der Fixierelemente wie Spannbügel, Stifte, Vorsprünge oder Stege festgelegt. Ebenso ist es aber auch möglich, daß an der Nabe zumindest eine Erhebung oder mehrere winkelversetzte Erhebungen vorgesehen sind, an denen die Fixierelemente angreifen und die axiale Lage in den zwei Richtungen festlegen.

Wenn eine Abdeckung einer Winkelmeßvorrichtung durch Drehung auf eine Abtasteinrichtung aufgesetzt wird, so z. B. aufgeschraubt wird, dann können Spreizelemente an der Abdeckung so ausgebildet sein, daß sie durch die Drehung die Vorsprünge oder Stege von der Ausnehmung oder Erhebung wegdrängen.

## Patentansprüche

1. Winkelmeßvorrichtung mit einem Teilungsträger (6), der über eine Nabe (5) an einer Welle (3) anschließbar ist und der von einer ortsfesten Abtasteinrichtung (4) abgetastet wird, wobei zum Festlegen der Lagezuordnung von Teilungsträger (6) und Abtasteinrichtung (4), Montagemittel vorgesehen sind, die mindestens ein Fixierelement aufweisen, das in Form eines die Nabe (5) umgreifenden Klemmelementes ausgebildet ist, das zum Festlegen des axialen Arbeitsabstandes zwischen Teilungsträger (6) und Abtasteinrichtung (4) mit Anschlagflächen (17) an der Nabe (5) zusammenwirkt, dadurch gekennzeichnet, daß in der Abtasteinrichtung (4) zumindest eine an die Form des Klemmelementes (19, 20) radial und axial angepaßte Öffnung (18) vorgesehen ist, in die das Klemmelement (19, 20) formschlüssig einbringbar ist, wobei diese Öffnung (18) radial nach innen weisende Anschlagflächen aufweist, welche das Klemmelement (19, 20) definiert an die Anschlagflächen (17) der Nabe (5) drängt und somit eine radiale und axiale Klemmung zwischen der Nabe (5) und der Abtasteinrichtung (4) hervorruft.

2. Winkelmeßvorrichtung mit einem Teilungsträger (206), der über eine Nabe (205) an einer Welle (3) anschließbar ist und der von einer ortsfesten Abtasteinrichtung (204, 304) abgetastet wird, wobei zum Festlegen der Lagezuordnung von Teilungsträger (206) und Abtasteinrichtung (204, 304), Montagemittel vorgesehen sind, die mindestens ein Fixierelement aufweisen, das in Form eines die Nabe (205, 305) umgreifenden Klemmelementes (219, 220, 319, 320) ausgebildet ist, das zum Festlegen des axialen Arbeitsabstandes zwischen Teilungsträger (206) und Abtasteinrichtung (204, 304) mit Anschlagflächen (217, 317) an der Nabe (205, 305) zusammenwirkt, dadurch gekennzeichnet, daß zumindest ein Druckelement (223, 323, 343) in der Abtasteinrichtung (204, 304) verschiebbar angeordnet ist, mit dem ein die Nabe (205, 305) umgreifender Bereich des Klemmelementes (219, 220, 319, 320) radial an die Anschlagflächen (217, 317) der Nabe (205, 305) andrückbar ist, wobei sich das Druckelement (223, 323, 343) an radial nach innen weisende Anschlagflächen der Abtasteinrichtung (204, 304) abstützt.

3. Winkelmeßvorrichtung mit einem Teilungsträger (406, 606), der über eine Nabe (405, 505, 605) an einer Welle (3) anschließbar ist und der von einer ortsfesten Abtasteinrichtung (404, 504, 604) abgetastet wird, wobei zum Festlegen der Lagezuordnung von Teilungsträger (406, 606) und Abtasteinrichtung (404, 504, 604) Montagemittel vorgesehen sind, die mindestens ein Fixierelement aufweisen, das in Form eines die Nabe (405, 505, 605) umgreifenden Klemmelementes (419, 420, 519, 520, 619, 620) ausgebildet ist, das zum Festlegen des axialen Arbeitsabstandes zwischen Teilungsträger (406, 606) und Abtasteinrichtung (404, 504, 604) mit Anschlagflächen (417, 517, 617) an der Nabe (405, 505, 605) zusammenwirkt, dadurch gekennzeichnet, daß das zumindest eine Klemmelement (419, 420, 519, 520, 619, 620) mit zumindest einem Ende an der Abtasteinrichtung (404, 504, 604) axial und radial ortsfest befestigt oder angeformt ist und das Klemmelement (419, 420, 519, 520, 619, 620) an dem die Nabe (405, 505, 605) umgreifenden Bereich vorgespannt an die Anschlagflächen (417, 517, 617) drückt, wobei ein Spreizelement (428, 528, 628, 638) vorgesehen ist, mit dem das Klemmelement (419, 420, 519, 520, 619, 620) und die Anschlagflächen (417, 517, 617) der Nabe (405, 505, 605) außer Kontakt bringbar sind.

4. Winkelmeßvorrichtung nach einem der Ansprüche 1, 2 oder 3, dadurch gekennzeichnet, daß die Klemmung an radial gegenüberliegenden Bereichen der Nabe (5, 205, 305, 405, 605) erfolgt.

5. Winkelmeßvorrichtung nach einem der Ansprüche 1, 2 oder 3, dadurch gekennzeichnet, daß die Anschlagflächen zumindest durch eine konzentrisch zur Nabenachse verlaufende nutförmige Ausnehmung (217, 317, 417, 517, 617) oder ringförmige Erhebung an der Nabe (205, 305, 405, 505, 605) gebildet sind.

6. Winkelmeßvorrichtung nach einem der Ansprüche 1, 2 oder 3, dadurch gekennzeichnet, daß die Anschlagflächen durch einzelne zueinander winkelversetzte nutförmige Ausnehmungen (17) oder Erhebungen in der Nabe (5) gebildet sind.

7. Winkelmeßvorrichtung nach Anspruch 1, dadurch gekennzeichnet, daß das Klemmelement durch Schenkel zumindest eines U-förmigen Spannbügels (19, 20) gebildet ist.

8. Winkelmeßvorrichtung nach Anspruch 7, dadurch gekennzeichnet, daß zwei U-förmige Spannbügel (19, 20) vorgesehen sind, deren Schenkel mit den Anschlagflächen (17) von vier gegeneinander winkelversetzten nutförmigen Ausnehmungen (17) in Kontakt stehen.

9. Winkelmeßvorrichtung nach einem der Ansprüche 2 oder 3, dadurch gekennzeichnet, daß die Klemmelemente als fingerförmige Vorsprünge (219, 220, 319, 320, 419, 420, 519, 520) oder Stege (619, 620) der Abtasteinrichtung (204, 304, 404, 504, 604) ausgebildet sind.

10. Winkelmeßvorrichtung nach Anspruch 9, dadurch gekennzeichnet, daß jeder der fingerförmigen Vorsprünge (219, 220) oder Stege eine Nase (224, 225) aufweist, die mit den Anschlagflächen (217) der Nabe (205) in Kontakt steht.

11. Winkelmeßvorrichtung nach Anspruch 9, dadurch gekennzeichnet, daß die Vorsprünge (219, 220, 319, 320, 419, 420, 519, 520) oder Stege (619, 620) quer zur Nabenachse federnd und in Richtung der Nabenachse starr sind.

12. Winkelmeßvorrichtung nach Anspruch 2, dadurch gekennzeichnet, daß die Klemmung an radial gegenüberliegenden Bereichen der Nabe (205) erfolgt, indem das Druckelement (223) quer zur Nabenachse verschiebbar ist und sich an voneinander beabstandeten Bereichen der Abtasteinrichtung (204) abstützt und mit einem dazwischen liegenden Bereich an dem Klemmelement (219, 220) anliegt.

13. Winkelmeßvorrichtung nach Anspruch 2, dadurch gekennzeichnet, daß als Druckelement ein U-förmiger Spannbügel (223) vorgesehen ist, der in Öffnungen (218) der Abtasteinrichtung (204) eingesetzt ist.

14. Winkelmeßvorrichtung nach Anspruch 2, dadurch gekennzeichnet, daß zwei Druckelemente vorgesehen sind, die als Schrauben (323, 343) in der Abtasteinrichtung (304) ausgebildet sind.

15. Winkelmeßvorrichtung nach Anspruch 3, dadurch gekennzeichnet, daß als Klemmelement zwei fingerförmige Vorsprünge (419, 420) vorgesehen sind, daß das Spreizelement (428) quer zur Nabenachse in der Abtasteinrichtung (404) verschiebbar ist, und daß das Spreizelement (428) Flächen aufweist, die mit den Vorsprüngen (419, 420) in Kontakt stehen.

16. Winkelmeßvorrichtung nach Anspruch 3, dadurch gekennzeichnet, daß das Spreizelement (528, 628, 638) an einer Abdeckung (516, 616) für die Abtasteinrichtung (504, 604) vorgesehen ist, und daß das Spreizelement (528, 628, 638) beim Aufsetzen der Abdeckung (516, 616) auf die Abtasteinrichtung (504, 604) mit den Vorsprüngen (519, 520) oder Stegen (619, 620) in Kontakt gebracht wird.

17. Winkelmeßvorrichtung nach Anspruch 16, dadurch gekennzeichnet, daß die Abdeckung (516) und die Abtasteinrichtung (504) über Rastelemente (529, 530) miteinander verbindbar sind, und daß in einer ersten Raststellung die Vorsprünge (519, 520) oder Stege mit den Anschlagflächen (517) der Nabe (505) in Kontakt stehen, und daß in einer zweiten Raststellung mittels des Spreizelementes (528) die Verbindung zwischen den Vorsprüngen (519, 520) oder Stegen und den Anschlagflächen (517) lösbar ist.

18. Winkelmeßvorrichtung nach Anspruch 17, dadurch gekennzeichnet, daß die Rastelemente von zwei Nuten (529, 530) in der Abtasteinrichtung (504) und einer dazu korrespondierenden Nase (531) an der Abdeckung (516) gebildet sind.

## Claims

1. An angle measuring devise with a graduation carrier (6), which can be attached to a shaft (3) by a hub (5) and which is sensed by a positionally fixed sensing device (4), wherein mounting means are provided to fix the positional relationship of the graduation carrier (6) and the sensing device (4), these fixing means having at least one fixing element in the form of a clamp element gripping around the hub (5) and which cooperates with abutment surfaces (17) on the hub (5) to determine the axial working distance between the graduation carrier (6) and the sensing device (4), characterized in that at least one opening (18) matched radially and axially to the shape of the clamp element (19, 20) is provided in the sensing device (4), into which opening the clamp element (19, 20) can be fitted in interlocking manner, wherein this opening (18) has radially inwardly directed abutment surfaces which press the clamp element (19, 20) in defined manner on to the abutment surfaces (17) of the hub (5) and thus establish a radial and axial clamping between the hub (5) and the sensing device (4).

2. An angle measuring device with a graduation carrier (206), which can be attached to a shaft (3) by a hub (205) and which is sensed by a positionally fixed sensing device (204, 304), wherein mounting means are provided to fix the positional relationship of the graduation carrier (206) and the sensing device (204, 304), these fixing means having at least one fixing element in the form of a clamp element (219, 220, 319, 320) gripping around the hub (205, 305) and which cooperates with abutment surfaces (217, 317) on the hub (205, 305) to determine the axial working distance between the graduation carrier (206) and the sensing device (204, 304), characterized in that at least one pressure element (223, 323, 343) is arranged movably in the sensing device (204, 304), with which element a region of the clamp element (219, 220, 319, 320) gripping round the hub (205, 305) can be pressed radially on to the abutment surfaces (217, 317) of the hub (205, 305), wherein the pressure element (223, 323, 343) abuts against radially inwardly directed abutment surfaces of the sensing device (204, 304).

3. An angle measuring device with a graduation carrier (406, 606), which can be attached to a shaft (3) by a hub (405, 505, 605) and which is sensed by a positionally fixed sensing device (404, 504, 604), wherein mounting means are provided to fix the positional relationship of the graduation carrier (406, 606) and the sensing device (404, 504, 604), these fixing means having at least one fixing element in the form of a clamp element (419, 420, 519, 520, 619, 620) gripping around the hub (405, 505, 605) and which cooperates with abutment surfaces (417, 517, 617) on the hub (405, 505, 605) to determine the axial working distance between the graduation carrier (406, 606) and the sensing device (404, 504, 604), characterized in that at least one clamp element (419, 420, 519, 520, 619, 620) is fixed at at least one end on the sensing device (404, 504, 604) or is formed thereon, in an axially and radially fixed position, and presses the clamp element (419, 420, 519, 520, 619, 620) under pre-tension on to the region gripping round the hub (405, 505, 605), wherein a spreader element (428, 528, 628, 638) is provided, with which the clamp element (419, 420, 519, 520, 619, 620) can be brought out of contact with the abutment (417, 517, 617) of the hub (405, 505, 605).

4. An angle measuring device according to claim 1, 2 or 3, characterized in that the clamping is effected at radially opposite regions of the hub (5, 205, 305, 405, 605).

5. An angle measuring device according to claim 1, 2 or 3, characterized in that the abutment surfaces are formed by at least one groove-form recess (217, 317, 417, 517, 617) or annular protuberance on the hub (5, 205, 305, 405, 605) extending concentric with the hub axis.

6. An angle measuring device according to claim 1, 2 or 3, characterized in that the abutment surfaces are formed by individual groove-form recesses (17) or protuberances in or on the hub (5), angularly offset from one another.

7. An angle measuring device according to claim 1, characterized in that the clamp element is formed by arms of at least one U-shaped clip (19, 20).

8. An angle measuring device according to claim 7, characterized in that two U-shaped clips (19, 20) are provided, with their arms in contact with the abutment surfaces (17) of four groove-form recesses (17) offset angularly from one another.

9. An angle measuring device according to claim 2 or 3, characterized in that the clamp elements are formed as finger-like projections (219, 220, 319, 320, 419, 420, 519, 520) or webs (619, 620) of the sensing device (204, 304, 404, 504, 604).

10. An angle measuring device according to claim 9, characterized in that each of the finger-like projections (219, 220) or webs has a nose (224, 225), which is in contact with the abutment surfaces (217) of the hub (205).

11. An angle measuring device according to claim 9, characterized in that the projections (219, 220, 319, 320, 419, 420, 519, 520) or webs (619, 620) are resilient transverse to the hub axis and rigid in the direction of the hub axis.

12. An angle measuring device according to claim 2, characterized in that the clamping is effected at radially opposite regions of the hub (205), in that the pressure element (223) is movable transverse to the hub axis and abuts mutually spaced regions of the sensing device (204) and bears with a region lying therebetween on the clamp element (219, 220).

13. An angle measuring device according to claim 2, characterized in that a U-shaped clip (223) is provided as the pressure element, being fitted in openings (218) in the sensing device (204).

14. An angle measuring device according to claim 2, characterized in that two pressure elements are provided, formed as screws (323, 343) in the sensing device (304).

15. An angle measuring device according to claim 3, characterized in that two finger-shaped projections (419, 420) are provided as the clamp element, in that the spreader element (428) is movable transverse to the hub axis in the sensing device (404), and in that the spreader element (428) has flats which are in contact with the projections (419, 420).

16. An angle measuring device according to claim 3, characterized in that the spreader element (528, 628, 638) is provided on a cover (516, 616) for the sensing device (504, 604), and in the spreader element (528, 628, 638) comes into contact by means of its projections (519, 520) or webs (619, 620) on placing the cover (516, 616) on the sensing device (504, 604).

17. An angle measuring device according to claim 16, characterized in that the cover (516) and the sensing device (504) can be connected together by detent elements (529, 530) and in that, in a first detent position, the projections (519, 520) or webs are in contact with the abutment surfaces (517) of the hub (505) and in that, in a second detent position, the connection between the projections (519, 520) or webs and the abutment surfaces (517) is releasable by means of the spreader element (528).

18. An angle measuring device according to claim 17, characterized in that the detent elements are formed from two grooves (529, 530) in the sensing device (504) and a corresponding nose (531) on the cover (516).

## Revendications

1. Dispositif de mesure d'angles comportant un support de graduation (6) qui peut être lié à un arbre (3) par l'intermédiaire d'un moyeu (5) et est lu par un dispositif de lecture (4) fixe, des moyens de montage étant prévus pour déterminer la position réciproque du support de graduation (6) et du dispositif de lecture (4), lesquels moyens comportent au moins un organe de blocage qui se présente sous la forme d'un élément de serrage entourant le moyeu (5) et qui, pour déterminer la distance axiale de fonctionnement entre le support de graduation (6) et le dispositif de lecture (4), coopère avec des surfaces de butée (17) du moyeu (5), caractérisé par le fait qu'il est prévu dans le dispositif de lecture (4) au moins une ouverture (18) adaptée radialement et axialement à la forme de l'élément de serrage (19, 20) et dans laquelle l'élément de serrage (19, 20) s'engage par conjugaison de forme, ladite ouverture (18) présentant des surfaces de butée tournées radialement vers l'intérieur qui pressent l'élément de serrage (19, 20) de manière déterminée contre les surfaces de butée (17) du moyeu (5) et provoquent ainsi un blocage radial et axial entre le moyeu (5) et le dispositif de lecture (4).

2. Dispositif de mesure d'angles comportant un support de graduation (206) qui peut être lié à un arbre (3) par l'intermédiaire d'un moyeu (205, 305) et est lu par un dispositif de lecture (204, 304) fixe, des moyens de montage étant prévus pour déterminer la position réciproque du support de graduation (206) et du dispositif de lecture (204, 304), lesquels moyens comportent au moins un organe de blocage qui se présente sous la forme d'un élément de serrage (219, 220, 319, 320) entourant le moyeu (205, 305) et qui, pour déterminer la distance axiale de fonctionnement entre le support de graduation (206) et le dispositif de lecture (204, 304), coopère avec des surfaces de butée (217, 317) du moyeu (205, 305), caractérisé par le fait qu'au moins un élément presseur (223, 323, 343) est monté dans le dispositif de lecture (204, 304) avec possibilité de déplacement en translation, lequel élément presseur permet d'appliquer radialement contre les surfaces de butée (217, 317) du moyeu (205, 305) une partie de l'élément de serrage (219, 220, 319, 320) entourant le moyeu (205, 305), l'élément presseur (223, 323, 343) prenant appui sur des surfaces de butée du dispositif de lecture (204, 304) tournées radialement vers l'intérieur.

3. Dispositif de mesure d'angles comportant un support de graduation (406, 606) qui peut être lié à un arbre (3) par l'intermédiaire d'un moyeu (405, 505, 605) et est lu par un dispositif de lecture (404, 504, 604) fixe, des moyens de montage étant prévus pour déterminer la position réciproque du support de graduation (406, 606) et du dispositif de lecture (404, 504, 604), lesquels moyens comportent au moins un organe de blocage qui se présente sous la forme d'un élément de serrage (419, 420, 519, 520, 619, 620) entourant le moyeu (405, 505, 605) et qui, pour déterminer la distance axiale de fonctionnement entre le support de graduation (406, 606) et le dispositif de lecture (404, 504, 604), coopère avec des surfaces de butée (417, 517, 617) du moyeu (405, 505, 605), caractérisé par le fait que l'élément de serrage (419, 420, 519, 520, 619, 620) au nombre d'au moins un, par une extrémité au moins, est fixé sans possibilité de déplacement dans les directions axiale et radiale sur le dispositif de lecture (404, 504, 604) ou est formé d'une pièce avec celui-ci et l'élément de serrage (419, 420, 519, 520, 619, 620), au niveau de la partie qui entoure le moyeu (405, 505, 605) est appliqué avec précontrainte contre les surfaces de butée (417, 517, 617), un élément écarteur (428, 528, 628, 638) au moyen duquel le contact entre l'élément de serrage (419, 420, 519, 520, 619, 620) et les surfaces de butée (417, 517, 617) du moyeu (405, 505, 605) peut être supprimé étant prévu.

4. Dispositif de mesure d'angles selon l'une des revendications 1, 2 ou 3, caractérisé par le fait que le serrage a lieu sur des parties radialement opposées du moyeu (5, 205, 305, 405, 605).

5. Dispositif de mesure d'angles selon l'une des revendications 1, 2 ou 3, caractérisé par le fait que les surfaces de butée sont formées au moins par un creux (217, 317, 417, 517, 617) en forme de gorge ou par une saillie en forme d'anneau concentrique à l'axe du moyeu (205, 305, 405, 505, 605).

6. Dispositif de mesure d'angles selon l'une des revendications 1, 2 ou 3, caractérisé par le fait que les surfaces de butée sont formées par des creux (17) en forme de gorge ou des saillies isolés du moyeu (5) angulairement décalés les uns par rapport aux autres.

7. Dispositif de mesure d'angles selon la revendication 1, caractérisé par le fait que l'élément de serrage est formé par des ailes d'au moins un étrier de serrage (19, 20) en U.

8. Dispositif de mesure d'angles selon la revendication 7, caractérisé par le fait qu'il est prévu deux étriers de serrage (19, 20) en U, dont les ailes sont en contact avec les surfaces de butée (17) de quatre creux (17) en forme de gorge angulairement décalés les uns par rapport aux autres.

9. Dispositif de mesure d'angles selon l'une des revendications 2 ou 3, caractérisé par le fait que les éléments de serrage sont réalisés sous forme de saillies (219, 220, 319, 320, 419, 420, 519, 520) en forme de doigts ou de nervures (619, 620) du dispositif de lecture (204, 304, 404, 504, 604).

10. Dispositif de mesure d'angles selon la revendication 9, caractérisé par le fait que chacune des saillies (219, 220) en forme de doigt ou des nervures comporte un talon (224, 225) qui est en contact avec les surfaces de butée (217) du moyeu (205).

11. Dispositif de mesure d'angles selon la revendication 9, caractérisé par le fait que les saillies (219, 220, 319, 320, 419, 420, 519, 520) ou les nervures (619, 620) sont élastiques dans la direction perpendiculaire à l'axe du moyeu et rigides dans la direction dudit axe du moyeu.

12. Dispositif de mesure d'angles selon la revendication 2, caractérisé par le fait que le serrage a lieu sur des parties radialement opposées du moyeu (205), l'élément presseur (223) pouvant se déplacer transversalement à l'axe du moyeu et prenant appui sur des parties du dispositif de lecture (204) distantes les unes des autres et étant appliqué sur l'élément de serrage (219, 220) par des parties situées entre celles-ci.

13. Dispositif de mesure d'angles selon la revendication 2, caractérisé par le fait qu'il est prévu comme élément presseur un étrier (223) en U qui s'engage dans des ouvertures (218) du dispositif de lecture (204).

14. Dispositif de mesure d'angles selon la revendication 2, caractérisé par le fait qu'il est prévu deux éléments presseurs qui se présentent sous la forme de vis (323, 343) situées sur le dispositif de lecture (304).

15. Dispositif de mesure d'angles selon la revendication 3, caractérisé par le fait qu'il est prévu comme élément de serrage deux saillie (419, 420) en forme de doigt, que l'élément écarteur (428) peut se déplacer dans le dispositif de lecture (404) perpendiculairement à l'axe du moyeu et que l'élément écarteur (428) présente des surfaces en contact avec les saillies (419, 420).

16. Dispositif de mesure d'angles selon la revendication 3, caractérisé par le fait que l'élément écarteur (528, 628, 638) est prévu sur un couvercle (516, 616) destiné au dispositif de lecture (504, 604) et que l'élément écarteur (528, 628, 638) est amené en contact avec les saillies (519, 520) ou les nervures (619, 620) lors de la mise en place du couvercle (516, 616) sur le dispositif de lecture (504, 604).

17. Dispositif de mesure d'angles selon la revendication 16, caractérisé par le fait que le couvercle (516) et le dispositif de lecture (504) sont reliés entre par des éléments à encliquetage (529, 530) et que, dans une première position encliquetée, les saillies (519, 520) ou les nervures sont en contact avec les surfaces de butée (517) du moyeu (505) et que, dans une deuxième position encliquetée, la liaison entre les saillies (519, 520) ou les nervures et les surfaces de butée (517) peut être libérée au moyen de l'élément écarteur (528).

18. Dispositif de mesure d'angles selon la revendication 17, caractérisé par le fait que les éléments à encliquetage sont constitués par deux gorges (529, 530) dans le dispositif de lecture (504) et un ergot (531) associé sur le couvercle (516).
